# EUROPÄISCHE PATENTSCHRIFT

(11) **EP 0 982 192 B1**
(45) Veröffentlichungstag und Bekanntmachung des Hinweises auf die Patenterteilung: **27.10.2004**
(21) Anmeldenummer: 99116074.8
(22) Anmeldetag: 17.08.1999
(51) Int. Cl.: B60R 7/04

(54) **Staubox sowie Anordnung aus einer Lagerkonsole und einer Staubox**
Storage compartment and arrangement comprising a bracket and a storage compartment
Réceptacle de rangement et dispositif comprenant un support et un réceptacle de rangement

(30) Priorität: 21.08.1998 DE 19838031
(43) Veröffentlichungstag der Anmeldung: 01.03.2000
(60) Teilanmeldung: 02027909.7
(73) Patentinhaber: AUDI AG, 85045 Ingolstadt (DE)
(72) Erfinder: Zeidler, Siegfried, 74906 Bad Rappenau (DE); Schmid, Rainer, 74177 Bad Friedrichshall (DE); Fromm, Peter, 74243 Langenbrettach (DE)

(56) Entgegenhaltungen:
- EP-A- 0 491 113
- DE-A- 3 805 113
- DE-A- 19 632 562
- DE-U- 29 809 488
- US-A- 5 647 652
- PATENT ABSTRACTS OF JAPAN vol. 006, no. 216 (M-168), 29. Oktober 1982 (1982-10-29) & JP 57 121946 A (NISSAN JIDOSHA KK), 29. Juli 1982 (1982-07-29)

## Beschreibung

Die Erfindung betrifft eine Mittelarmlehne gemäß dem Oberbegriff des Patentanspruchs 1.

Als Mittelarmlehnen konzipierte Stauboxen sind sowohl durch offenkundige Vorbenutzung als auch durch Beschreibungen in der Patentliteratur (siehe beispielsweise DE 44 28 886 und DE 44 15 732 A1) bekannt. Bevorzugt ist die Staubox integraler Bestandteil der betreffenden Mittelarmlehne, die zwischen den beiden Vordersitzen eines Kraftfahrzeuges angeordnet ist. Der Deckel der Staubox ist häufig mit einer Polsterung versehen und als Armauflage ausgeführt. Ein durch diesen Deckel verschließbarer Grundkörper bildet ein Behältnis zur Aufnahme verschiedener Utensilien. Weit verbreitet ist die Unterbringung von Mobiltelefonen in derartig ausgeführten Mittelarmlehnen.

Als weiterer Stand der Technik werden die DE 43 40 516 A1 und die DE 40 34 358 C1 erwähnt. In der erstgenannten Schrift wird eine zur Seite verschiebbare Telefonaufnahme beschrieben, die in der Gebrauchsstellung ergonomisch günstig positioniert ist. In der letztgenannten Schrift wird eine verschwenkbare Haltevorrichtung für Autotelefone erläutert, mit der das Autotelefon zwischen einer Gebrauchsposition und einer Abstellposition hin- und her verschwenkbar ist.

Die Erfindung geht aus von einer Mittelarmlehne mit Staubox gemäß der gattungsbildenden EP-A-0 491 113. Beim Gegenstand dieser Druckschrift ist der Deckel der Staubox an seiner vorderen und an seiner hinteren Schmalseite an dem wannenartigen Grundkörper angelenkt. Die beiden (horizontalen) Schwenkachsen lassen sich durch je eine Drucktaste gegen Federwiderstand lösen, so dass der Deckel entweder um die vordere oder um die rückwärtige Schenkachse hochgeklappt werden kann. Der wannenartige Grundkörper dagegen ist nicht schwenkbar, sondern fahrzeugfest angeordnet.

Der Erfindung liegt die Aufgabe zugrunde, bei einer Mittelarmlehne der eingangs bezeichneten Gattung die Staubox so weiterzubilden, dass die Betätigung darin untergebrachter Utensilien oder deren Entnahme hinsichtlich des Bedienkomforts optimiert wird.

Erfindungsgemäß wird die Aufgabe bei einer eingangs gennanten Mittelarmlehne durch die kennzeichnenden Merkmale des Patentanspruchs 1 gelöst.

Zwar ist es durch die DE 38 05 113 A1 an sich bekannt, für die Deckel eines kästchenartigen Behältnisses eine schräg angestellte Schwenklagerung vorzusehen. Es handelt sich jedoch bei dem Behältnis nach DE 38 05 113 A1 - gattungsmäßig abweichend vom Gegenstand der vorliegenden Anmeldung - nicht um eine als Mittelarmlehne fungierende Staubox, sondem um das Gehäuse einer Buchsenanordnung für Telekommunikationskabel.

Ein wesentlicher Vorteil der erfindungsgemäßen Mittelarmlehne mit Staubox wird darin gesehen, dass mit einer einfachen konstruktiven Maßnahme, nämlich der Schräganstellung der Schwenklagerachse, bei ansonsten gleichem Aufbau konventionelle Mittelarmlehnen in Richtung verbesserter Ergonomie modifiziert werden können. Im Vergleich zu konventionell ausgeführten Stauboxen ergibt sich mit der erfindungsgemäßen Lösung nach Patentanspruch 1 nicht nur eine Verbesserung der Ergonomie für den Fahrer, sondern auch zumindest für den Beifahrer.

In vorteilhafter Weiterbildung der Erfindung ergibt sich eine ergonomisch günstige Klappkinematik für den Deckel der Staubox, wenn die Schwenklagerung in einem der Rückenlehne eines Fahrzeugsitzes abgewandten Endbereich des wannenartigen Grundkörpers vorgesehen ist. Die Richtung der Schräganstellung wird so gewählt, dass sich beim Öffnen des Deckels eine Bewegung zum Beifahrersitz hin ergibt. Diese vom Lenkrad eines Fahrzeugs wegführende Bewegung erzeugt eine Verstellung des freien Deckelendes genau in den Griffradius des Fahrers hinein. Gleichzeitig wird durch die Verschwenkung in Richtung Beifahrersitz damit die Konsole aber auch für den Beifahrer bequemer zugänglich, wenn dieser beispielsweise ein Telefonat führen möchte.

Weitere Ausgestaltungen der Erfindung sind auch den Patentansprüchen 2 und 4 zu entnehmen.

Die erfindungsgemäße Lösung ist nicht nur an schwenkbaren Armlehnen realisierbar, sondern kann beispielsweise auch an Stauboxen verwirklicht werden, die zwischen Fahrzeugsitzen auf Schienenführungen bewegbar sind, wie sie beispielsweise in der DE 197 42 408 A1 beschrieben sind.

Hervorzuheben ist weiter, dass - für den bevorzugten Anwendungsfall der Erfindung auf schwenkbaren Mittelarmlehnen - rein äußerlich keinerlei Unterschied zu bislang gebräuchlichen Mittelarmlehnen auftreten. Demnach sind also durch den Einsatz der Erfindung optische oder designtechnische Beeinträchtigungen nicht gegeben. Außerdem können praxiserprobte Konzepte zur Arretierung der Armlehne in verschiedene Gebrauchsstellungen übernommen werden.

In der Zeichnung sind vorteilhafte Ausführungsbeispiele der Erfindung dargestellt, an denen die Erfindung verwirklicht ist. Es zeigt:
- Fig. 1: eine als Mittelarmlehne ausgeführte Staubox in einer ersten Seitenansicht,
- Fig. 2: die Staubox gemäß Fig. 1 in einer anderen Seitenansicht, und
- Fig. 3: eine Ansicht gemäß Schnitt III-III in Fig. 1.

Gleiche Bauteile weisen in allen Figuren die gleiche Bezifferung auf.

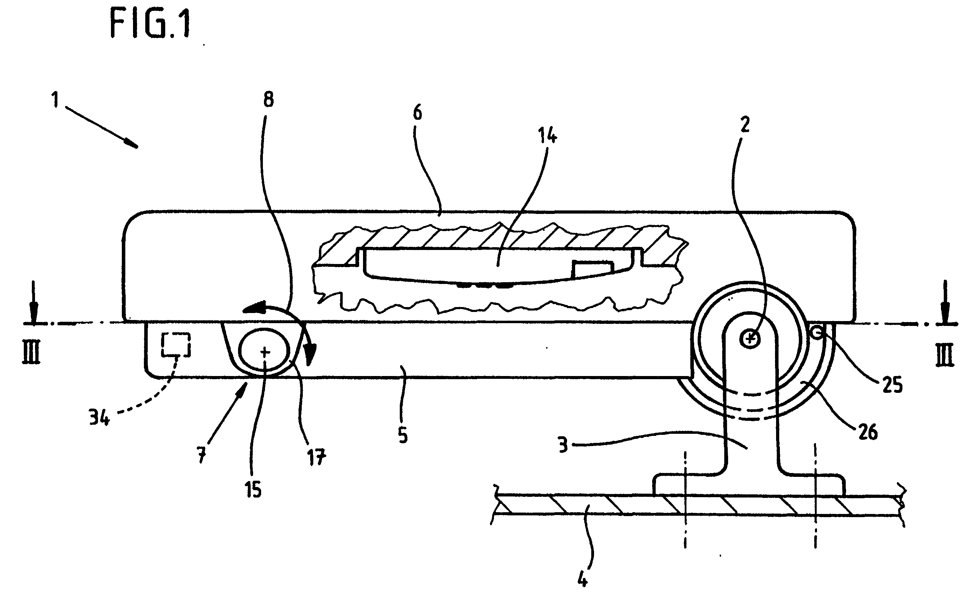

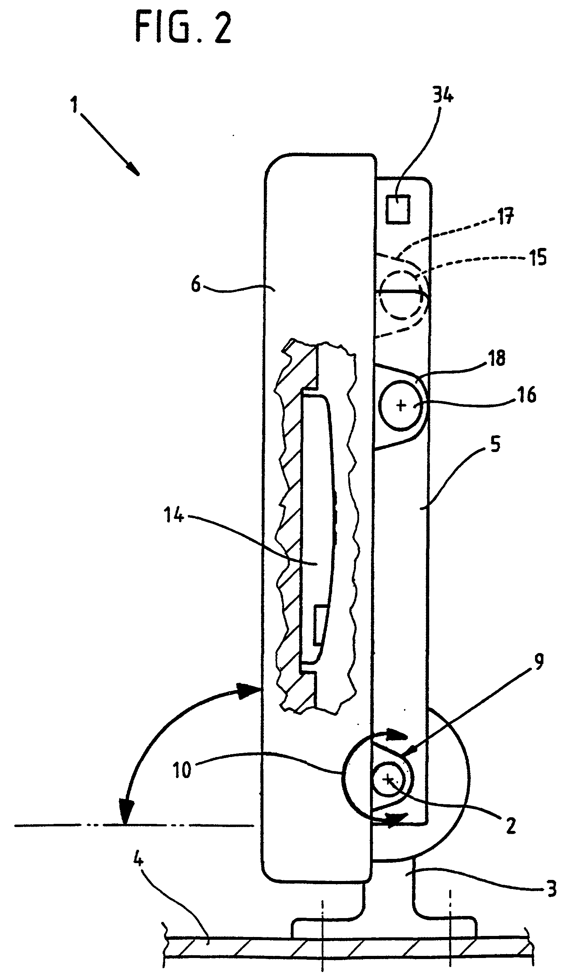

Man erkennt in Fig. 1 eine als Mittelarmlehne 1 ausgeführte Staubox, die mittels einer Basislagerung 2 an einem als Lagerkonsole wirksamen Lagerfuß 3 verschwenkbar gehalten ist. Letzterer ist hier an einem Verkleidungsteil 4, beispielsweise einer Mitteltunnelabdeckung, befestigt. Abweichend von der in Fig. 1 gezeigten Anordnung kann der Lagerfuß 3 aber auch einem Sitzgestell oder einem Fahrzeugseitenwandteil zugeordnet sein. Wesentliche Elemente der Mittelarmlehne 1 sind ein wannenartig ausgeführter Grundkörper 5 und ein als Armauflage dienender Deckel 6, der in später noch zu erläuternder Weise gegenüber dem wannenartigen Grundkörper 5 einerseits um eine Schwenklagerung 7 gemäß Doppelpfeil 8 und andererseits um eine Zusatzschwenklagerung 9 gemäß Doppelpfeil 10 (siehe Fig. 2) verschwenkbar ist.

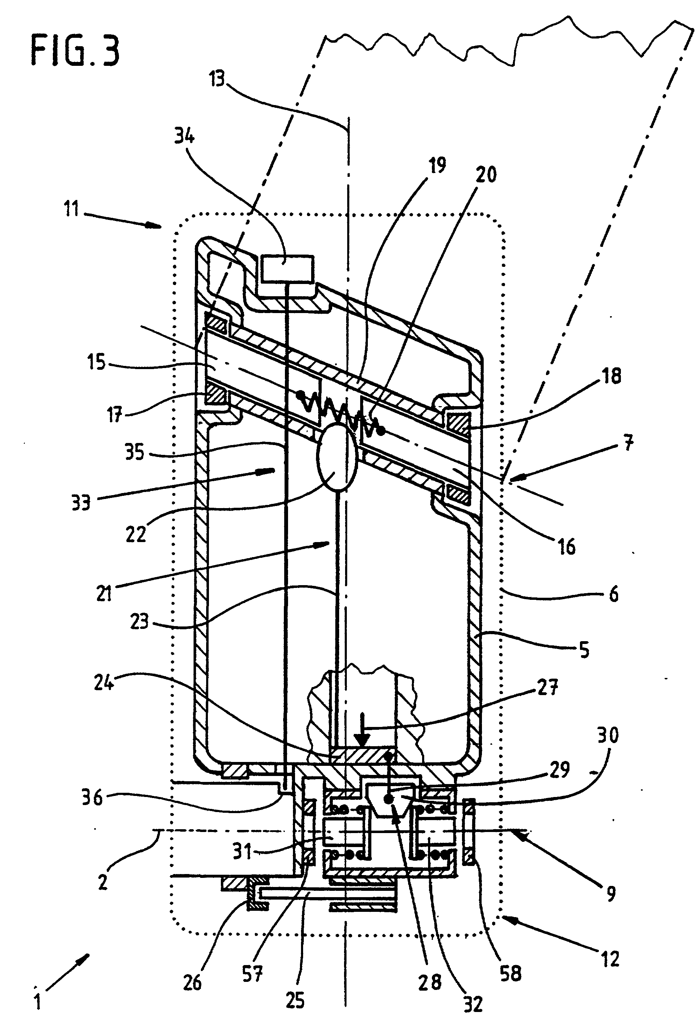

Figur 3 zeigt Ausführungsbeispiele für die Schwenklagerung 7, die hier einem vorderen Endbreich 11 der Mittelarmlehne 1 zugeordnet ist, und die Zusatzschwenklagerung 9, die sich in einem hinteren Endbereich 12 der Mittelarmlehne 1 befindet, Für eine zwischen Vordersitzen eines Kraftfahrzeuges angeordnete Mittelarmlehne 1 bedeutet dies, dass der vordere Endbereich 11 bei der in Fig. 1 gezeigten Horizontalstellung von der Rückenlehne abgewandt ist und dementsprechend der gegenüberliegende Endbereich 12 der Rückenlehne zugewandt ist.

Die Schwenklagerung 7 des Deckels 6 ist - bezogen auf eine Längsachse 13 des wannenartigen Grundkörpers 5 - von der Senkrechten auf die Längsachse 13 abweichend schräg angestellt. Dadurch ergibt sich bei einem Aufklappen des Deckels 6 (in Fig. 3 punktiert angedeutete Schließstellung) für diesen die strichpunktiert dargestellte Gebrauchsposition.

In ergonomisch günstiger Weise wird damit, beispielsweise für einen bezogen auf die Ansicht in Fig. 3 linkssitzenden Fahrer, ein an dem Deckel 6 innenseitig gehaltenes Handy 14 in eine ergonomisch günstige Bereitschaftsposition gebracht. Die Schwenklagerung 7 wird hier realisiert durch dem wannenartigen Grundkörper 6 zugeordnete Gelenkzapfen 15, 16 einerseits und dem Deckel 6 zugeordnete Lagerohren 17, 18 andererseits.
Innerhalb einer Schiebehülse 19 sind die Gelenkzapfen 15, 16 gleitbeweglich und hier mittels einer Zugfeder 20 gegeneinander verspannt. Für die Bewegung der Gelenkzapfen 15, 16 in die Lagerohren 17, 18 hinein (Aktivierung der Schwenklagerung) und auch wieder aus diesen heraus (Desaktivierung der Schwenklagerung) ist ein erster Verstellmechanismus 21 vorgesehen, dessen wesentliche Elemente hier ein Druckkörper 22, eine erste Übertragungsstange 23, ein Gleitschieber 24, ein daran gehaltener Stellbolzen 25 und eine mit Bezug auf den Lagerfuß 3 ortsfeste Führungskulisse 26 sind. Dieser Verstellmechanismus 21 ist hier nur skizzenhaft angedeutet und aus Gründen der Übersichtlichkeit nicht in seinen genauen Proportionen wiedergegeben.

Die erste Verstelleinrichtung 21 stellt eine Bewegungskopplung zwischen den Gelenkzapfen 15, 16 und der Verschwenkung der gesamten Mittelarmlehne 1 um die Basislagerung 2 dar. Wird beispielsweise die Mittelarmlehne 1 aus der in Fig. 1 gezeigten Horizontallage heraus in die Gebrauchslage gemäß Fig. 2 verschwenkt, sorgt der in der Führungskulisse 26 geführte Stellbolzen 25 für eine Abwärtsbewegung des Gleitschiebers 24 gemäß Pfeil 27. Durch diese Abwärtsbewegung wird der Druckkörper 22 von der ersten Übertragungsstange 23 ebenfalls abwärts bewegt und damit soweit aus der Schiebehülse 19 herausgezogen, dass die Zugfeder 20 die Gelenkzapfen 15, 16 aus der in Fig. 3 dargestellten Lagerungsstellung heraus in eine Lösestellung aufeinander zu bewegen kann. Die in Fig. 1 gezeigte erste Verbindung zwischen dem Deckel 6 und dem Grundkörper 5 über die Schwenklagerung 7 ist damit aufgehoben.

Gemäß einer besonders vorteilhaften Weiterbildung der Erfindung ist hier eine zweite der Zusatzschwenklagerung 9 zugeordnete Verstelleinrichtung 28 mit der ersten Verstelleinrichtung 21 wirkverbunden. So übt beispielsweise der Gleitschieber 24 über eine zweite Übertragungsstange 29 Betätigungskräfte auf einen Stellkörper 30 aus, durch den über hier nicht weiter bezifferte Druckfedern vorgespannte Gelenkzapfen 31, 32 aus der in der Zeichnung erkennbaren Lösestellung heraus in Lagerohren 57, 58 hineinbewegbar sind. Die Verstelleinrichtungen 21 und 28 sind demnach so aufeinander abgestimmt, dass eine Auflösung der ersten Schwenklagerung 7 mit dem Aufbau der Zusatzschwenklagerung 9 einhergeht. Bei der Abwärtsverschwenkung der Mittelarmlehne 1 aus der in Fig. 2 gezeigten Position heraus ergeben sich dann die umgekehrten Verhältnisse.

Es wird hier noch einmal ausdrücklich betont, dass die in Fig. 3 gezeigten Verhältnisse rein schematischer Natur sind. Vorstellbar ist auch eine vollständige Entkopplung der Verstelleinrichtungen 21 und 28. Anstelle der Übertragungsstangen 23 und 29 können auch Seilzüge vorgesehen sein. Ebenso können den Gelenkzapfen 15, 16 sowie 31 Aktuatoren zugeordnet sein, die elektrisch oder auf Fluidbasis betätigt sind. Gleiches gilt im übrigen für eine ebenfalls nur schematisch dargestellte Arretiereinrichtung 33, deren wesentliche Elemente hier eine Drucktaste 34, eine dritte Übertragungsstange 35 und ein dem Lagerfuß 3 zugeordnetes Rastprofil 36 sind, Derartige Arretiereinrichtungen zur Sicherung der Mittelarmlehne 1 in unterschiedlichen Winkellagen sind allgemein bekannt und werden hier deshalb nicht näher beschrieben.

## Patentansprüche

1. Mittelarmlehne für ein Fahrzeug, die eine Staubox (1) mit einem wannenartigen Grundkörper (5) aufweist, an dem wenigstens ein Deckel (6) schwenkbar angelenkt ist, **dadurch gekennzeichnet, dass** bezogen auf eine Längsachse (13) des Grundkörpers (5) eine Schwenklagerung (7) des Deckels (6) von der Senkrechten auf die Längsachse (13) abweichend schräg angestellt ist.

2. Mittelarmlehne nach Anspruch 1, **dadurch gekennzeichnet, dass** die Staubox (1) zwischen Fahrzeugsitzen anlenkbar und/oder verschiebbar angeordnet ist.

3. Mittelarmlehne nach Anspruch 2, **dadurch gekennzeichnet, dass** ein erster Endbereich (11) der Staubox (1) mit Bezug auf eine Rückenlehne (38) des Fahrzeugsitzes an einem der Rückenlehne (38) abgewandten Ende des wannenartigen Grundkörpers (5) vorgesehen ist.

4. Mittelarmlehne nach Anspruch 2, **dadurch gekennzeichnet, dass** ein zweiter Endbereich (12) der Staubox (1) mit Bezug auf eine Rückenlehne (38) des Fahrzeugsitzes an einem der Rückenlehne zugewandten Ende des wannenartigen Grundkörpers (5) vorgesehen ist.

## Claims

1. Central arm rest for a vehicle, having a storage compartment (1) with a trough-like base body (5) on which at least one cover (6) is pivotably articulated, **characterised in that** relative to a longitudinal axis (13) of the base body (5), a pivoting bearing (7) of the cover (6) is arranged obliquely, in deviation from the perpendicular to the longitudinal axis (13).

2. Central arm rest according to Claim 1, **characterised in that** the storage compartment (1) is arranged articulably and/or displaceably between vehicle seats.

3. Central arm rest according to Claim 2, **characterised in that** a first end region (11) of the storage compartment (1) relative to a backrest (38) of the vehicle seat is provided on an end of the trough-like base body (5) facing away from the backrest (38).

4. Central arm rest according to Claim 2, **characterised in that** a second end region (12) of the storage compartment (1) relative to a backrest (38) of the vehicle seat is provided on an end of the trough-like base body (5) facing towards the backrest.

## Revendications

1. Accoudoir central pour un véhicule, présentant un réceptacle de rangement (1) comprenant un corps de base (5) du genre d'une auge, auquel est articulé à pivotement au moins un couvercle (6), **caractérisé en ce que**, en se référant à un axe longitudinal (13) du corps de base (5) un montage pivotant (7) du couvercle (6) est articulé obliquement, en différant de la verticale, sur l'axe longitudinal (13).

2. Accoudoir central selon la revendication 1, **caractérisé en ce que** le réceptacle de rangement (1) est disposé de façon pouvant être articulé et/ou déplacé, entre les sièges de véhicule.

3. Accoudoir central selon la revendication 2, **caractérisé en ce qu'**une première zone d'extrémité (11) du réceptacle de rangement (1) est prévue, en se référant à un dossier (38) du siège de véhicule, sur une extrémité, opposée au dossier (38), du corps de base (5) du genre d'une auge.

4. Accoudoir central selon la revendication 2, **caractérisé en ce qu'**une deuxième zone d'extrémité (12) du réceptacle de rangement (1) est prévue, en se référant à un dossier (38) du siège de véhicule, sur une extrémité, tournée vers le dossier, du corps de base (5) du genre d'une auge.
